# EUROPÄISCHE PATENTSCHRIFT

(11) **EP 2 399 048 B1**
(45) Veröffentlichungstag und Bekanntmachung des Hinweises auf die Patenterteilung: **19.12.2012**
(21) Anmeldenummer: 10701845.9
(22) Anmeldetag: 22.01.2010
(51) Int. Cl.: F16H 57/02, F16H 57/04, B60K 6/405

(54) **HYBRIDANTRIEB FÜR EIN KRAFTFAHRZEUG**
HYBRID DRIVE FOR A MOTOR VEHICLE
ENTRAÎNEMENT HYBRIDE POUR UN VÉHICULE AUTOMOBILE

(30) Priorität: 17.02.2009 DE 102009000915
(43) Veröffentlichungstag der Anmeldung: 28.12.2011
(73) Patentinhaber: ZF Friedrichshafen AG, 88038 Friedrichshafen (DE)
(72) Erfinder: GIESSNER, Andreas Sylvester, 88045 Friedrichshafen (DE)
(86) Internationale Anmeldenummer: PCT/EP2010/050711
(87) Internationale Veröffentlichungsnummer: WO 2010/094530

(56) Entgegenhaltungen:
- EP-A1- 0 250 283
- EP-A1- 1 900 564
- EP-A2- 1 544 510
- DE-A1-102006 040 117
- DE-A1-102007 024 126

## Beschreibung

Die Erfindung betrifft einen Hybridantrieb für ein Kraftfahrzeug, mit einer Brennkraftmaschine, mit einem Schaltgetriebe mit einer mit der Brennkraftmaschine kuppelbaren Getriebeeingangswelle, und mit einer zwischen der Brennkraftmaschine sowie dem Schaltgetriebe angeordneten Elektromaschine, die einen Stator und einen mit der Getriebeeingangswelle zusammenwirkenden sowie in einem Getriebegehäuseeingangsteil drehbar gelagerten Rotor aufweist, vgl. DE 10 2006 040 117A oder DE 10 2007 024 126A.

Ein derartiger Hybridantrieb ist auch in der DE 60 2004 004 932 T2 beschrieben. Der Hybridantrieb umfasst eine Brennkraftmaschine und zwei Elektromaschinen. Es ist ein Zahnradmechanismus mit zwei Planetenzahnradsätzen offenbart, worin ein Hohlzahnrad des ersten Planetenzahnradsatzes mit einem Planetenträger des zweiten Planetenzahnradsatzes verbunden ist und ein Sonnenrad des zweiten Planetenzahnradsatzes mit einem der Elektromaschinen in Antriebsverbindung steht, während ein Sonnenrad des ersten Planetenzahnradsatzes mit der zweiten Elektromaschine in Antriebsverbindung steht. Eine mit der Brennkraftmaschine über eine schaltbare Kupplung in Antriebsverbindung stehende Getriebeeingangswelle ist mit einem Planetenträger des ersten Planetenzahnradsatzes verbunden und dieser bildet gleichzeitig ein Hohlzahnrad für den zweiten Planetenzahnradsatz. Die Achsen der Elektromaschinen sind zueinander parallel angeordnet, wobei die erste Elektromaschine parallel und beabstandet zur Achse der zwei Planetenzahnradsätze angeordnet ist und mit diesen über einen Zahnradsatz in Verbindung steht, während die zweite Elektromaschine koaxial zu den zwei Planetenzahnradsätzen angeordnet ist und dessen Rotor einerseits in einem Getriebegehäuseeingangsteil des Zahnradmechanismus und andererseits auf der von der Brennkraftmaschine angetriebenen Getriebeeingangswelle gelagert ist.

Der Erfindung liegt die Aufgabe zugrunde, eine einfache Möglichkeit zur Integration einer Elektromaschine in ein Schaltgetriebe, insbesondere in ein automatisiertes oder automatisches Schaltgetriebe vorzuschlagen, die sich durch einen einfachen Aufbau und eine verlängerte Lageriebensdauer auszeichnet.

Diese Aufgabe wird bei einem Hybridantrieb für ein Kraftfahrzeug, mit einer Brennkraftmaschine, mit einem Schaltgetriebe mit einer mit der Brennkraftmaschine kuppelbaren Getriebeeingangswelle, und mit einer zwischen der Brennkraftmaschine sowie dem Schaltgetriebe angeordneten Elektromaschine, die einen Stator und einen mit der Getriebeeingangswelle zusammenwirkenden sowie in einem Getriebegehäuseeingangsteil drehbar gelagerten Rotor aufweist erfindungsgemäß dadurch gelöst, dass die Getriebeeingangswelle in einem Lagerhals des Getriebegehäuseeingangsteils mittels eines Festradiallagers und eines dazu beabstandeten Losradiallagers gelagert ist, der Rotor mit einem aus dem Lagerhals herausragenden Fortsatz der Getriebeeingangswelle drehfest verbunden ist, eine Radialwellendichtung am zum Rotor gerichteten Ende des Lagerhalses angeordnet ist, und die beiden Radiallager durch das Getriebeöl gekühlt und geschmiert sind.

Der erfindungsgemäße Hybridantrieb bezieht sich auf ein paralleles Einkupplungssystem, bei dem die Ausbildung des Schaltgetriebes an sich unerheblich ist und es sich insbesondere um ein automatisiertes oder ein automatisches Schaltgetriebe handeln kann, mit dessen Getriebeeingangswelle der Rotor der Elektromaschine in drehfester Verbindung steht und nur die Brennkraftmaschine wahlweise mit dem Schaltgetriebe kuppelbar ist.

Die Konstruktion gemäß der Erfindung ermöglicht es, die beiden genannten Radiallager mit Getriebeöl zu schmieren sowie zu kühlen und dadurch eine Erhöhung der Lebensdauer der Lager gegenüber bekannten Lageranordnungen mit Radiallagem beiderseits des Rotors der Elektromaschine zu erzielen, da bei diesen bekannten Lageranordnungen eine direkte Schmierung des dem Schaltgetriebe abgewandten Lagers über das Getriebeöl nicht möglich ist.

Im Einzelnen kann der Rotor an einem Rotorträger befestigt sein, dessen Nabe über eine formschlüssige Verbindung mit dem genannten Fortsatz der Getriebeeingangswelle verbunden ist, so dass die Radialwellendichtung gegenüber der Nabe gleitend abdichten kann.

Wenn die Getriebeeingangswelle als Hohlwelle ausgebildet ist, lässt sich eine Antriebswelle in der Hohlwelle anordnen und mit dieser über eine formflüssige Verbindung drehfest verbinden. Die Antriebswelle stellt dann die Verbindung zur Brennkraftmaschine her. Es kann aber auch eine einteilige Antriebs-Getriebeeingangswelle vorgesehen sein.

Die Zentrierung der Antriebswelle kann einerseits gegenüber der Getriebeeingangswelle mittels eines Zentrierbunds erfolgen, wo auch eine Abdichtung mittels einer O-Ringdichtung vorgesehen ist und eine axiale Festlegung mittels eines Sicherungsrings erfolgt, während das entgegengesetzte Ende der Antriebswelle in einem Pilotlager in einem Massenschwungrad der Brennkraftmaschine gelagert ist.

Eine Zentrierung der Nabe des Rotorträgers kann dadurch erfolgen, dass die Nabe benachbart zur formschlüssigen Verbindung mit dem Fortsatz der Getriebeeingangswelle einen zylindrischen Bereich aufweist, der mit einem entsprechenden zylindrischen Bereich an der Getriebeeingangswelle einen Zentriersitz bildet, wobei eine Abdichtung in diesem Bereich ebenfalls mittels eine O-Ringdichtung erfolgt.

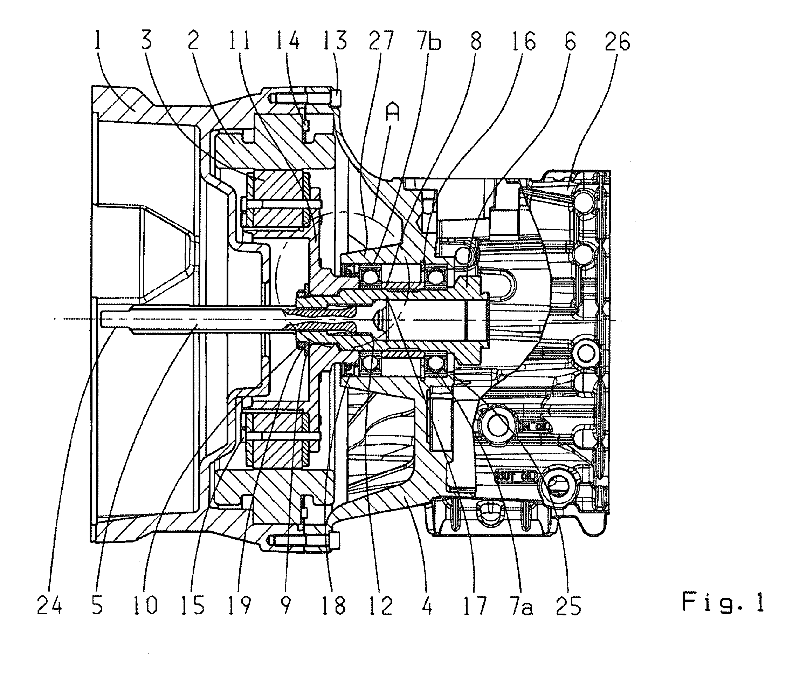

Die Erfindung wird nachstehend anhand eines in der Zeichnung dargestellten Ausführungsbeispiels weiter erläutert. In der Zeichnung zeigt
- Fig. 1: eine schematische Schnittdarstellung eines Hybridantriebs für ein Kraftfahrzeug, und

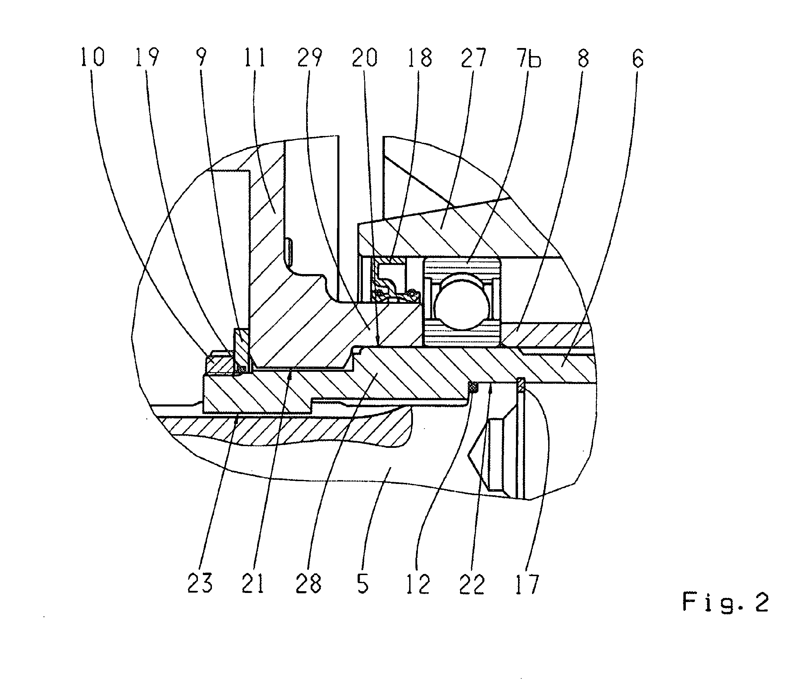

- Fig. 2: eine vergrößerte Detailansicht der Verbindung zwischen dem Rotorträger und der Getriebeeingangswelle des Hybridantriebs gemäß Fig. 1.

Ein Hybridantriebsgehäuse 1 lässt sich mit einer nicht dargestellten Brennkraftmaschine verbinden, die über ein nicht dargestelltes Massenschwungrad mit einer Antriebswelle 5 kuppelbar ist, wobei ein getriebefeme Lagersitz 24 an der Antriebswelle 5 in dem Pilotlager des Massenschwungrad, welches beispielsweise als Zweimassenschwungrad ausgeführt ist, gelagert ist.

Im Hybridantriebsgehäuse 1 ist eine Elektromaschine mit einem Stator 2 und einem Rotor 3 angeordnet, die als Generator oder als Elektromotor betrieben werden kann. Der Stator 2 ist mit dem Hybridantriebsgehäuse 1 mittels Schrauben 14 verbunden. Ein in seiner Außengeometrie konischer Getriebegehäuseeingangsteil 4 eines Schaltgetriebes 26 ist mit dem Hybridantriebsgehäuse 1 mittels Schrauben 13 verschraubt. Das Getriebeeingangsgehäuse 4 ist radial innen mit einem sich axial erstreckenden Lagerhals 27 versehen, der zur Lagerung einer Getriebeeingangswelle 6 mittels eines Festradiallagers 7a und eines durch eine Hülse 8 auf Abstand gehaltenen Losradiallagers 7b gelagert ist.

Das Festradiallager 7a ist im Lagerhals 27 mittels eines Sicherungsringes 16 in axialer Richtung gesichert. Ein über das Losradiallager 7b hinausragender Fortsatz 28 der Getriebeeingangswelle 6 weist ein radial äußeres Keitwellenprofil 21 auf, das mit einem entsprechenden radial inneren Keilwellenprofil in einer Nabe 29 eines Rotorträgers 11 eine formschlüssige Verbindung zwischen dem Rotor 3 und der Getriebeeingangswelle 6 ergibt. Ein zylindrischer Bereich, benachbart zum Keilwellenprofil 21 in der Nabe 29, bildet mit einem entsprechenden zylindrischen Bereich an der Getriebeeingangswelle 6 einen Zentriersitz 20.

Der Rotorträger 11 ist gegenüber der Getriebeeingangswelle 6 in der Weise axial gesichert, dass eine vorgegebene, axiale Vorspannkraft, beispielsweise über eine Nutmutter 10 und eine Scheibe 9, auf den Innenring des Losradiallagers 7b und über die Hülse 8 auf den Innenring des Festradiallagers 7a aufgebracht wird, wobei sich der Innenring des Festradiallagers 7a auf einem Absatz 25 der Getriebeeingangswelle 6 abstützt.

Die Getriebeeingangswelle 6 ist in diesem Ausführungsbeispiel als Hohlwelle ausgebildet, in der koaxial die Antriebswelle 5 angeordnet ist und mit der Getriebeeingangswelle 6 über eine formschlüssige Verbindung in Form eines Keilwellenprofils 23 drehfest verbunden ist. Die Antriebswelle 5 weist einen Zentrierbund 22 auf, der gegenüber der Getriebeeingangswelle 6 mittels einer O-Ringdichtung 12 abgedichtet und mittels eines Sicherungsrings 17 axial festgelegt ist. In einem weiteren nicht dargestellten Ausführungsbeispiel kann alternativ eine einteilige Antriebs-Getriebeeingangswelle vorgesehen sein.

Der Rotor 3 der Elektromaschine ist mit dem Rotorträger 11 mittels Schrauben 15 verbunden.

Um zu verhindern, dass das Öl aus dem Schaltgetriebe 26 über die Lager 7a und 7b in das Hybridantriebsgehäuse 1 wandert, ist eine Radialwellendichtung 18 im Lagerhals 27 angeordnet, die eine Umlaufdichtung gegenüber der Nabe 29 des Rotorträgers 11 ergibt. Weitere statische Abdichtungen sind zwischen der Getriebeeingangswelle 6 und der Antriebswelle 5 im Bereich des Zentriersitzes 22 in Form einer O-Ringdichtung 12 und zwischen der Nabe 29 des Rotorträgers 11 und der Getriebeeingangswelle 6 in Form einer O-Ringdichtung 19 im Bereich der Scheibe 9 vorgesehen.

Der Rotorträger 11 bildet zusammen mit der Getriebeeingangswelle 6 im Lagerhals 27 eine fliegende Lagerung, die gegenüber der Elektromaschine 2, 3 axial versetzt und in das Getriebegehäuseeingangsteil 4 integriert ist, wodurch es möglich ist, die beiden Radiallager 7a und 7b durch das Getriebeöl zu schmieren sowie zu kühlen und eine Erhöhung der Lagerlebensdauer zu erreichen.

### Bezugszeichenliste

- 1: Hybridantriebsgehäuse
- 2: Stator einer Elektromaschine
- 3: Rotor einer Elektromaschine
- 4: Getriebegehäuseeingangsteil
- 5: Antriebswelle
- 6: Getriebeeingangswelle
- 7a: Festradiallager
- 7b: Losradiallager
- 8: Hülse
- 9: Scheibe
- 10: Nutmutter
- 11: Rotorträger
- 12: O-Ringdichtung
- 13: Schraube
- 14: Schraube
- 15: Schraube
- 16: Sicherungsring
- 17: Sicherungsring
- 18: Radialwellendichtring
- 19: O-Ringdichtung
- 20: Zentriersitz
- 21: Formschlüssige Verbindung (Keilwellenprofil)
- 22: Zentriersitz
- 23: Formschlüssige Verbindung (Keilwellenprofil)
- 24: Lagersitz
- 25: Absatz
- 26: Schattgetriebe
- 27: Lagerhals
- 28: Fortsatz
- 29: Nabe

## Patentansprüche

1. Hybridantrieb für ein Kraftfahrzeug, mit einer Brennkraftmaschine, mit einem Schaltgetriebe (26) mit einer mit der Brennkraftmaschine kuppelbaren Getriebeeingangswelle (6), und mit einer zwischen der Brennkraftmaschine sowie dem Schaltgetriebe (26) angeordneten Elektromaschine, die einen Stator (2) und einen mit der Getriebeeingangswelle (6) zusammenwirkenden sowie in einem Getriebegehäuseeingangsteil (4) drehbar gelagerten Rotor (3) aufweist, **dadurch gekennzeichnet, dass** die Getriebeeingangswelle (6) in einem Lagerhals (27) des Getriebegehäuseeingangsteils (4) mittels eines Festradiallagers (7a) und eines dazu beabstandeten Losradiallagers (7b) gelagert ist, der Rotor (3) mit einem aus dem Lagerhals (27) herausragenden Fortsatz (28) der Getriebeeingangswelle (6) drehfest verbunden ist, eine Radialwellendichtung (18) am zum Rotor (3) gerichteten Ende des Lagerhalses (27) angeordnet ist, und die beiden Radiallager (7a, 7b) durch das Getriebeöl gekühlt und geschmiert sind.

2. Hybridantrieb nach Anspruch 1, **dadurch gekennzeichnet, dass** der Rotor (3) an einem Rotorträger (11) befestigt ist und eine Nabe (29) des Rotorträgers (11) über eine formschlüssige Verbindung (21) mit dem Fortsatz (28) der Getriebeeingangswelle (6) verbunden ist.

3. Hybridantrieb nach Anspruch 2, **dadurch gekennzeichnet, dass** die Radialwellendichtung (18) gegenüber der Nabe (29) gleitend abdichtend ausgebildet ist.

4. Hybridantrieb nach einem der Ansprüche 1 bis 3, **dadurch gekennzeichnet, dass** die Getriebeeingangswelle (6) als Hohlwelle ausgebildet ist, in der eine Antriebswelle (5) angeordnet und mit der Getriebeeingangswelle (6) über eine formschlüssige Verbindung (23) drehfest verbunden ist.

5. Hybridantrieb nach einem der Ansprüche 1 bis 3, **gekennzeichnet durch** eine einteilige Antriebs-Getriebeeingangswelle.

6. Hybridantrieb nach Anspruch 4, **dadurch gekennzeichnet, dass** die Antriebswelle (5) einen Zentrierbund (22) aufweist, der gegenüber der Getriebeeingangswelle (6) mittels einer O-Ringdichtung (12) abgedichtet und mittels eines Sicherungsrings (17) axial festgelegt ist.

7. Hybridantrieb nach einem der Ansprüche 1 bis 6, **dadurch gekennzeichnet, dass** die Nabe (29) des Rotorträgers (11) benachbart zur formschlüssigen Verbindung (21) einen zylindrischen Bereich aufweist, der mit einem entsprechenden zylindrischen Bereich an der Getriebeeingangswelle (6) einen Zentriersitz (20) bildet.

8. Hybridantrieb nach Anspruch 7, **dadurch gekennzeichnet, dass** die Nabe (29) des Rotorträgers (11) gegenüber dem Fortsatz (28) an der Getriebeeingangswelle (6) mittels einer O-Ringdichtung (19) abgedichtet ist.

## Claims

1. Hybrid drive for a motor vehicle, with an internal combustion engine, with a manual transmission (26) with a transmission input shaft (6) which can be coupled to the internal combustion engine, and with an electric machine arranged between the internal combustion engine and the manual transmission (26), which electric machine has a stator (2) and a rotor (3) which interacts with the transmission input shaft (6) and is rotatably mounted in a transmission housing input part (4), **characterized in that** the transmission input shaft (6) is mounted in a journal (27) of the transmission housing input part (4) by means of a fixed journal bearing (7a) and a loose journal bearing (7b) spaced apart therefrom, the rotor (3) is connected rotationally conjointly to a projection (28), which protrudes from the journal (27), of the transmission input shaft (6), a radial shaft seal (18) is arranged at the end of the journal (27) directed towards the rotor (3), and both journal bearings (7a, 7b) are cooled and lubricated by the transmission oil.

2. Hybrid drive according to Claim 1, **characterized in that** the rotor (3) is fastened on a rotor carrier (11) and a hub (29) of the rotor carrier (11) is connected via a positive-locking connection (21) to the projection (28) of the transmission input shaft (6).

3. Hybrid drive according to Claim 2, **characterized in that** the radial shaft seal (18) is formed so as to provide a sliding seal with respect to the hub (29).

4. Hybrid drive according to one of Claims 1 to 3, **characterized in that** the transmission input shaft (6) is formed as a hollow shaft in which a drive shaft (5) is arranged and is connected rotationally conjointly to the transmission input shaft (6) via a positive-locking connection (23).

5. Hybrid drive according to one of Claims 1 to 3, **characterized by** a one-part drive-transmission input shaft.

6. Hybrid drive according to Claim 4, **characterized in that** the drive shaft (5) has a centring shoulder (22) which is sealed off from the transmission input shaft (6) by means of an 0-ring seal (12) and is axially fixed by means of a securing ring (17).

7. Hybrid drive according to one of Claims 1 to 6, **characterized in that** the hub (29) of the rotor carrier (11) has a cylindrical region adjacent to the positive-locking connection (21), which region forms a centring seat (20) with a corresponding cylindrical region on the transmission input shaft (6).

8. Hybrid drive according to Claim 7, **characterized in that** the hub (29) of the rotor carrier (11) is sealed off from the projection (28) on the transmission input shaft (6) by means of an 0-ring seal (19).

## Revendications

1. Entraînement hybride pour un véhicule automobile, comprenant un moteur à combustion interne avec une boîte de vitesses (26) avec un arbre d'entrée de boîte de vitesses (6) pouvant être accouplé au moteur à combustion interne et comprenant une machine électrique disposée entre le moteur à combustion interne et la boîte de vitesses (26), qui présente un stator (2) et un rotor (3) coopérant avec l'arbre d'entrée de boîte de vitesses (6) et monté à rotation dans une partie d'entrée du boîtier de boîte de vitesses (4), **caractérisé en ce que** l'arbre d'entrée de boîte de vitesses (6) est monté dans un collet de palier (27) de la partie d'entrée du boîtier de boîte de vitesses (4) au moyen d'un palier radial fixe (7a) et d'un palier radial fou (7b) espacé de celui-ci, le rotor (3) est connecté de manière solidaire en rotation à une saillie (28) de l'arbre d'entrée de boîte de vitesses (6) faisant saillie hors du collet de palier (27), un joint à lèvre radial (18) est disposé à l'extrémité du collet de palier (27) orientée vers le rotor (3) et les deux paliers radiaux (7a, 7b) sont refroidis et lubrifiés par l'huile de boîte de vitesses.

2. Entraînement hybride selon la revendication 1, **caractérisé en ce que** le rotor (3) est fixé sur un support de rotor (11) et un moyeu (29) du support de rotor (11) est connecté par le biais d'une connexion par engagement par correspondance géométrique (21) à la saillie (28) de l'arbre d'entrée de boîte de vitesses (6).

3. Entraînement hybride selon la revendication 2, **caractérisé en ce que** le joint à lèvre radial (18) est réalisé de manière à réaliser l'étanchéité glissante par rapport au moyeu (29).

4. Entraînement hybride selon l'une quelconque des revendications 1 à 3, **caractérisé en ce que** l'arbre d'entrée de boîte de vitesses (6) est réalisé sous forme d'arbre creux dans lequel est disposé un arbre d'entraînement (5) et qui est connecté de manière solidaire en rotation à l'arbre d'entrée de boîte de vitesses (6) par le biais d'une connexion par engagement par correspondance géométrique (23).

5. Entraînement hybride selon l'une quelconque des revendications 1 à 3, **caractérisée par** un arbre d'entrée de boîte de vitesses d'entraînement d'une seule pièce.

6. Entraînement hybride selon la revendication 4, **caractérisé en ce que** l'arbre d'entraînement (5) présente un épaulement central (22) qui est étanché par rapport à l'arbre d'entrée de boîte de vitesses (6) au moyen d'un joint d'étanchéité torique (12) et qui est fixé axialement au moyen d'une bague de fixation (17).

7. Entraînement hybride selon l'une quelconque des revendications 1 à 6, **caractérisé en ce que** le moyeu (29) du support de rotor (11) présente, à côté de la connexion par engagement par correspondance géométrique (21), une région cylindrique qui forme avec une région cylindrique correspondante sur l'arbre d'entrée de boîte de vitesses (6) un siège de centrage (20).

8. Entraînement hybride selon la revendication 7, **caractérisé en ce que** le moyeu (29) du support de rotor (11) est étanché par rapport à la saillie (28) sur l'arbre d'entrée de boîte de vitesses (6) au moyen d'un joint d'étanchéité torique (19).
